Europäisches Patentamt

European Patent Office

Office européen des brevets

(19)

(11) Veröffentlichungsnummer: **0 260 424**
**B1**

(12) # EUROPÄISCHE PATENTSCHRIFT

(45) Veröffentlichungstag der Patentschrift:
**16.05.90**

(21) Anmeldenummer: **87111237.1**

(22) Anmeldetag: **04.08.87**

(51) Int. Cl.$^5$: **C01B 33/02**, C22B 9/02

(54) Verfahren zur Herstellung von kohlenstoffarmen Silicium.

(30) Priorität: **14.08.86 DE 3627624**

(43) Veröffentlichungstag der Anmeldung:
**23.03.88 Patentblatt 88/12**

(45) Bekanntmachung des Hinweises auf die Patenterteilung:
**16.05.90 Patentblatt 90/20**

(84) Benannte Vertragsstaaten:
**DE FR GB IT NL**

(56) Entgegenhaltungen:
**EP-A- 0 007 063
AU-B- 85 129
DE-A- 1 960 999
DE-C- 682 997
FR-A- 1 155 844
US-A- 4 388 286**

(73) Patentinhaber: **BAYER AG,
D-5090 Leverkusen 1 Bayerwerk(DE)**

(72) Erfinder: **Schwirtlich, Ingo, Dr., Hausweberstrasse 26,
D-4150 Krefeld(DE)**
Erfinder: **Woditsch, Peter, Dr., Deswatinesstrasse 83,
D-4150 Krefeld(DE)**
Erfinder: **Koch, Wolfgang, Dr., Hoeninghausstrasse 63,
D-4150 Krefeld(DE)**

## Beschreibung

Gegenstand der Erfindung ist ein Verfahren zur Herstellung von kohlenstoffarmem Silicium aus Siliciumschmelzen.

Silicium wird vorwiegend durch carbothermische Reduktion von Siliciumdioxid im Lichtbogenofen gewonnen. Dabei entsteht ein Material, sogenanntes metallurgisches Silicium, das 96 bis 99 Gew.-% Silicium und unterschiedliche Verunreinigungen enthält. In erster Linie sind dies die Elemente Aluminium, Eisen, Bor, Phosphor und Kohlenstoff und Verbindungen der genannten Elemente.

Für den Einsatz in der Photovoltaik werden große Mengen preiswerten Siliciums benötigt.

Dieses Silicium, sogenanntes Silicium mit Solarqualität, muß bestimmte Reinheitsanforderungen erfüllen (vgl. Dietl, J.,Helmreich, D. Sirtl, E.: Solar Silicon, in Grabmaier, J. (Herausgeber): Crystals, Growth, Properties, Applications, Bd. 5, S. 45, Berlin-Heidelberg-New York, Springer 1981).

Es ist bisher kein Verfahren bekannt geworden mit dem metallurgisches Silicium in einem einfachen Schritt auf den gewünschten Reinheitsgrad veredelt werden kann. Es ist vielmehr ein mehrstufiger Reinigungsprozeß erforderlich.

Die Metalle können dabei nach der US-A 2 402 839 durch eine Säurebehandlung entfernt werden, und der Gehalt an Phosphor läßt sich durch eine Vakuumbehandlung bis auf die erforderlichen Konzentrationen reduzieren. Die Gehalte an Bor und Kohlenstoff lassen sich nur schwer, im Fall von Bor so gut wie nicht, auf die gewünschten geringen Konzentrationen verringern.

Metallurgisches Silicium mit einem Reinheitsgrad von ca. 98 % enthält in der Regel 700-1500 ppma Kohlenstoff (ppma bedeutet: Atome Kohlenstoff pro eine Million Atome Silicium).

Diese Konzentration liegt weit oberhalb der zulässigen Toleranzgrenze für den Einsatz in der Photovoltaik. Eine Verringerung des Kohlenstoffgehaltes ist daher unbedingt erforderlich.

In der EP-A 0 137 306 wird über die Entfernung von Kohlenstoff an festen Siliciumbruchstücken durch Behandeln der Bruchstücke mit wäßriger Nitratlösung und Glühen bei 1000-1100°C berichtet.

Mit diesem Verfahren kann jedoch keine ausreichende Entfernung von Kohlenstoff erreicht werden.

In der DE-A 3 403 131 wird ein Verfahren zur Reinigung von im Lichtbogenofen erzeugtem Silicium von nichtreduziertem Quarz bzw, nichtreagierter Kohle beschrieben, in dem das Silicium in einem Graphittiegel oder einem Quarztiegel aufgeschmolzen wird. Der nichtreduzierte Quarz und die nichtreagierte Kohle sammeln sich dabei an der Tiegelwand an und bleiben dort beim Abgießen des Siliciums haften. Der erforderliche Reinheitsgrad kann jedoch auch mit diesem Verfahren nicht erreicht werden.

In der DE-A 3 416 559 wird ein Verfahren beschrieben, bei dem die in der Siliciumschmelze vorhandenen Siliciumcarbid- und Siliciumdioxid-Partikel mit Hilfe einer Zentrifuge mechanisch abgetrennt werden. Dieses Verfahren ist jedoch sehr aufwendig.

Die Aufgabe der Erfindung bestand nun darin, ein Verfahren zur Herstellung von kohlenstoffarmem Silicium aus Siliciumschmelzen anzugeben, das die beschriebenen Nachteile nicht aufweist.

Überraschenderweise wurde nun gefunden, daß kohlenstoffarmes Silicium dadurch erhalten werden kann, indem das Silicium auf Temperaturen von 1420 bis 1900°C erwärmt wird und in der Schmelze ein Temperaturgradient eingestellt wird.

Als günstiger Temperturgradient hat sich ein Bereich von 30 bis 400 K erwiesen.

Gegenstand der Erfindung ist somit ein Verfahren zur Herstellung von kohlenstoffarmem Silicium aus Siliciumschmelzen, welches dadurch gekennzeichnet ist, daß das Silicium auf Temperaturen von 1420 bis 1900°C erwärmt wird und in der Schmelze ein Temperaturgradient von 30 bis 400 K eingestellt wird. Vorzugsweise wird ein Temperaturgradient von 30 bis 200 K eingestellt.

Der Temperaturgradient Kann durch Kühlung des unteren Bereichs des Schmelzgefäßes eingestellt werden. Vorzugsweise wird der Temperaturgradient durch Kühlung des Bodens des Schmelzgefäßes auf eine Temperatur im Bereich von 1420 bis 1500°C eingestellt. Bei einer Variante des erfindungsgemäßen Verfahrens wird das Schmelzgefäß über eine Widerstandsheizung aufgeheizt und dann soweit abgesenkt, sodaß sich der Boden unterhalb der untersten Heizzone befindet.

Die Temperatur des kühlen Bereichs des Schmelzgefäßes soll die Schmelztemperatur von Silicium nicht unterschreiten, da es dann zur Kristallisation von Silicium kommt.

Bei einer besonders bevorzugten Variante des Verfahrens werden auf der Innenseite des gekühlten Bodens des Schmelzgefäßes ein oder mehrere Impfkristalle, vorzugsweise aus Siliciumcarbid angebracht. Durch Vorlegen dieser Impfkristalle wird das Wachstum der Siliciumcarbidkristalle aus der Schmelze unterstützt.

Dabei ist es vorteilhaft die Siliciumcarbidkristalle auf einer Temperatur im Bereich von 1420 bis 1500°C zu halten, da es bei Unterschreiten dieser Temperatur wie oben bereits erwähnt zur Kristallisation von Silicium kommt.

In einer weiteren bevorzugten Ausführungsform des Verfahrens wird die Siliciumschmelze unter Vakuum oder unter Intergas gehalten, um den Eintrag von Verunreinigungen in die Schmelze und unerwünschte Reaktionen des Siliciums mit Luftbestandteilen zu minimieren.

Als Intergas wird vorzugsweise Argon verwendet.

Bei der Verwendung von Graphittiegeln kann mit diesem Verfahren eine schnelle und wirtschaftliche Entfernung der Kohlenstoffgehalte auf die Löslichkeitsgrenze in schmelzflüssigem Silicium erreicht werden.

Durch Einsatz von Schmelzgefäßen aus Hochtemperaturkeramiken wie Siliciumnitrid oder mit Einschränkungen auch aus Quarz kann der Kohlenstoffgehalt unter die Löslichkeitsgrenze in schmelzflüssigem Silicium reduziert werden.

Nach dem erfindungsgemäßen Verfahren wird ein kohlenstoffarmes Silicium erhalten, dessen Kohlenstoffgehalt im Bereich von 60 bis 95 ppma liegt, während die Gehalte an anderen Verunreinigungen in der Regel durch Anwendung des erfindungsgemäßen Verfahrens nicht reduziert werden.

Das erfindungsgemäße Verfahren soll anhand der folgenden Beispiele näher erläutert werden.

Beispiel 1

In einem 2 kg fassenden Graphittiegel mit angeschlossener Vakuumapparatur wurde Silicium mit einem Kohlenstoffgehalt von 1500 ppma aufgeschmolzen. Der Tiegel war von einer 10 mm dicken Isoliermatte aus Graphitfilz umgeben. In der Mitte des Tiegelbodens wurde diese Isolation in einer kreisförmigen Öffnung mit einem Durchmesser von 40 mm fortgelassen. Der Tiegelboden konnte seine Wärme dadurch in die Vakuumapparatur mit wassergekühlten Wänden frei abstrahlen. Durch eine Mittelfrequenzanregung wurde der Tiegel so hoch erwärmt, daß sich an der gekühlten Stelle des Bodens eine Temperatur von 1420°C einstellte. Die Temperatur am oberen Rand des Tiegels betrug unter diesen Bedingungen ca. 1600°C. Nach einer Haltezeit von zwei Stunden im Vakuum wurde die Schmelze abgegossen. Nach Abkühlen und Öffnen der Apparatur zeigte sich am Boden des Tiegels in einer kreisförmigen Anordnung, deren Durchmesser dem gekühlten Bereich entsprach, eine Anhäufung von kleinen Kristallen, die sich nach Untersuchung als Siliciumcarbidkristalle herausstellten. Eine Analyse des abgegossenen Siliciums ergab einen Kohlenstoffgehalt von 93 ppma.

Beispiel 2

Silicium mit einem Kohlenstoffgehalt von 1500 ppma wurde unter den gleichen Bedingungen in Beispiel 1 behandelt. Der Tiegel entsprach dem Tiegel in Beispiel 1. An der gekühlten Stelle wurden nun aber mehrere kleine Siliciumcarbidkristalle vorgelegt. Nach Beendigung des Versuchs zeigte sich eine deutliche Größenzunahme der vorgelegten Siliciumcarbidkristalle. Der Kohlenstoff gehalt wurde auf 90 ppma reduziert.

Beispiel 3

In einem 500 g fassenden Siliciumnitridtiegel wurde Silicium über eine Widerstandheizung unter einer Argonatmosphäre aufgeschmolzen. In diesem Versuchsaufbau konnte die Tiegelposition auf - und abwärts verstellt werden.

Nach Aufschmelzen der gesamten Charge wurde der Tiegel so weit abgesenkt, daß sich der Boden unterhalb der untersten Heizzone befand. Dabei wurde die Position so gewählt, daß sich eine Temperatur von 1420°C am Tiegelboden einstellte. Der obere Teil des Tiegels hatte eine Temperatur von 1550°C. Nach einer Haltezeit von acht Stunden wurde der Tiegel langsam abgesenkt, so daß die Schmelze von unten nach oben erstarrte. Nach Abkühlen des Blockes und Entfernen des Tiegels wurden am Tiegelboden mehrere grünliche SiC-Kristalle gefunden, die im gekühlten Bereich gewachsen waren. Der Kohlenstoffgehalt des Siliciums wurde bei diesem Versuch von 826 ppma auf 63 ppma reduziert, womit er unter der Löslichkeitsgrenze in schmelzflüssigem Silicium liegt.

**Patentansprüche**

1. Verfahren zur Entfernung von Kohlenstoff aus Siliciumschmelzen, dadurch gekennzeichnet, daß das Silicium auf Temperaturen von 1420 bis 1900°C erwärmt wird und in der Schmelze ein Temperaturgradient von 30 bis 400 K eingestellt wird.

2. Verfahren nach Anspruch 1, dadurch gekennzeichnet, daß ein Temperaturgradient von 30 bis 200 K eingestellt wird.

3. Verfahren nach Anspruch 1 oder 2, dadurch gekennzeichnet, daß der Temperaturgradient durch Kühlung des Bodens des Schmelzgefäßes auf eine Temperatur im Bereich von 1420 bis 1500°C eingestellt wird.

4. Verfahren nach einem oder mehrerer der Ansprüche 1 bis 3, dadurch gekennzeichnet, daß auf der Innenseite des gekühlten Bodens des Schmelzgefäßes ein oder mehrere Impfkristalle aus Siliciumcarbid angebracht werden.

5. Verfahren nach einem oder mehrerer der Ansprüche 1 bis 4, dadurch gekennzeichnet, daß die Siliciumcarbidkristalle auf einer Temperatur im Bereich von 1420 bis 1500°C gehalten werden.

6. Verfahren nach einem oder mehrerer der Ansprüche 1 bis 5, dadurch gekennzeichnet, daß die Silicium schmelze unter Vakuum oder unter Inertgas gehalten wird.

7. Verfahren nach Anspruch 6, dadurch gekennzeichnet, daß die Siliciumschmelze unter einem Vakuum von $10^{-3}$ bis $10^{-6}$ mbar gehalten wird.

8. Verfahren nach Anspruch 6, dadurch gekennzeichnet, daß das Intergas Argon ist.

**Claims**

1. A process for the removal of carbon from silicon melts, characterized in that the silicon is heated to temperatures of 1420 to 1900°C and a temperature gradient of 30 to 400 K is established in the melt.

2. A process as claimed in claim 1, characterized in that a temperature gradient of 30 to 200 K is established.

3. A process as claimed in claim 1 or 2, characterized in that the temperature gradient is established by cooling the base of the melting pot to a temperature in the range from 1420 to 1500°C.

4. A process as claimed in one or more of claims 1 to 3, characterized in that one or more seed crystals of silicon carbide are arranged on the inside of the cooled base of the melting pot.

5. A process as claimed in one or more of claims 1 to 4, characterized in that the silicon carbide crystals are kept at a temperature in the range from 1420 to 1500°C.

6. A process as claimed in one or more of claims 1 to 5, characterized in that the silicon melt is kept in a vacuum or in an inert gas atmosphere.

7. A process as claimed in claim 6, characterized in that the silicon melt is kept in a vacuum of $10^{-3}$ to $10^{-6}$ mbar.

8. A process as claimed in claim 6, characterized in that the inert gas is argon.

**Revendications**

1. Procédé pour éliminer le carbone du silicium fondu, caractérisé en ce que l'on chauffe le silicium à des températures de 1420 à 1900°C et on établit dans la masse fondue un gradient de température de 30 à 400 K.

2. Procédé selon la revendication 1, caractérisé en ce que l'on établit un gradient de température de 30 à 200 K.

2. Procédé selon la revendication 1 ou 2, caractérisé en ce que l'on établit le gradient de température en refroidissant le fond du récipient de fusion à une température dans l'intervalle de 1420 à 1500°C.

4. Procédé selon une ou plusieurs des revendications 1 à 3, caractérisé en ce que l'on applique sur la face intérieure du fond refroidi du récipient de fusion un ou plusieurs cristaux d'ensemencement de carbure de silicium.

5. Procédé selon une ou plusieurs des revendications 1 à 4, caractérisé en ce que les cristaux de carbure de silicium sont maintenus à une température dans l'intervalle de 1420 à 1500°C.

6. Procédé selon une ou plusieurs des revendications 1 à 5, caractérisé en ce que le silicium fondu est maintenu sous vide ou en atmosphère de gaz inerte.

7. Procédé selon la revendication 6, caractérisé en ce que le silicium fondu est maintenu sous un vide de $10^{-3}$ à $10^{-6}$ mbar.

8. Procédé selon la revendication 6, caractérisé en ce que le gaz inerte est l'argon.